Europäisches Patentamt

(19) European Patent Office

Office européen des brevets

(11) Publication number: **0 079 184**
**A1**

(12) **EUROPEAN PATENT APPLICATION**

(21) Application number: **82305771.6**

(22) Date of filing: **29.10.82**

(51) Int. Cl.³: **F 16 H 55/18**

(30) Priority: **30.10.81 US 316362**

(43) Date of publication of application:
**18.05.83 Bulletin 83/20**

(84) Designated Contracting States:
**DE FR GB IT**

(71) Applicant: **XEROX CORPORATION**
**Xerox Square - 020**
**Rochester New York 14644(US)**

(72) Inventor: **Olsen, Alf J.**
**630 Chelmsford Lane**
**Elk Grove Village Illinois 60007(US)**

(74) Representative: **Prior, Nicholas J. European Patent**
**Attorney et al,**
**Rank Xerox Patent Department 338 Euston Road**
**London NW1 3BH(GB)**

(54) **Split, spring-opposed anti-blacklash gear.**

㊵ An improved split, spring-operated anti-backlash gear
(1) for use as a center gear in a three-gear train (23, 1, 27),
One (3) of the split gears (3, 5) is mounted such that it can
pivot about its mating surfaces with either of the gears it
contacts. The pivoting feature allows positive engagement of
the center gear with both mating gears (23, 27).

FIG. I

## SPLIT, SPRING-OPPOSED ANTI-BACKLASH GEAR

The invention relates to a split, spring-opposed anti-backlash gear for use as a center gear in a three-gear train. One of the split gears is mounted such that it can pivot around its mating surfaces with either of the gears it contacts. The pivoting ability allows the correction of greater variation in tooth-to-tooth spacings between the outer two gears than was previously obtainable without the use of a pivoting gear.

In the past, split, spring-opposed anti-backlash gears have been used to eliminate the backlash or tooth-to-tooth clearance between mating gears. However, when these anti-backlash gears were used in a gear train where more than one gear was in contact with the anti-backlash gear, the tooth-to-tooth clearance would be eliminated for only that gear pair that had the least clearance.

The invention as claimed is intended to provide a remedy. The anti-backlash gear of this invention can provide positive contact between the teeth of both of the gears mating with the anti-backlash gear even though one gear may have greater clearance than the other gear.

The split, spring opposed anti-backlash gear of this invention is a gear split into two full gears, which is used as the center gear of a three-gear train. The split gears are attached to each other with diametrically opposed springs such that when the springs are tensioned, the gears are spring-biased rotationally in opposite directions about their mounting shaft axis. The mounting bore of one of the split gears is made to be relatively securely fixed to its mounting shaft and is used as the master or locating gear. The mounting bore of the second split gear is purposely made larger in diameter than its mounting shaft by a predetermined amount. The tensioned, diametrically opposed springs cause the split gears to counterrotate relative to each other about their axis until the tooth-to-tooth clearance of the tightest gear is taken up. As the split gear with the oversize mounting bore is not constrained by its mounting shaft, it continues to move pivoting about the tooth, which made contact with the closer fitting gear, until the tooth clearance is taken up at the opposite or second gear interface.

One way of carrying out the invention is described in detail below with reference to the drawing, which illustrates only one specific embodiment in which:

Figure 1 is a planar view of a three-gear train showing how the split, spring-opposed anti-backlash gear of this invention can eliminate the clearance between contacting gears, the contacting gears having differing tooth-to-tooth spacings or clearances.

Figure 2 is a cross-sectional view taken along line 2-2 in Figure 1.

Figure 3 is a vertical cross-section of the center split ring gear shown in Figure 1.

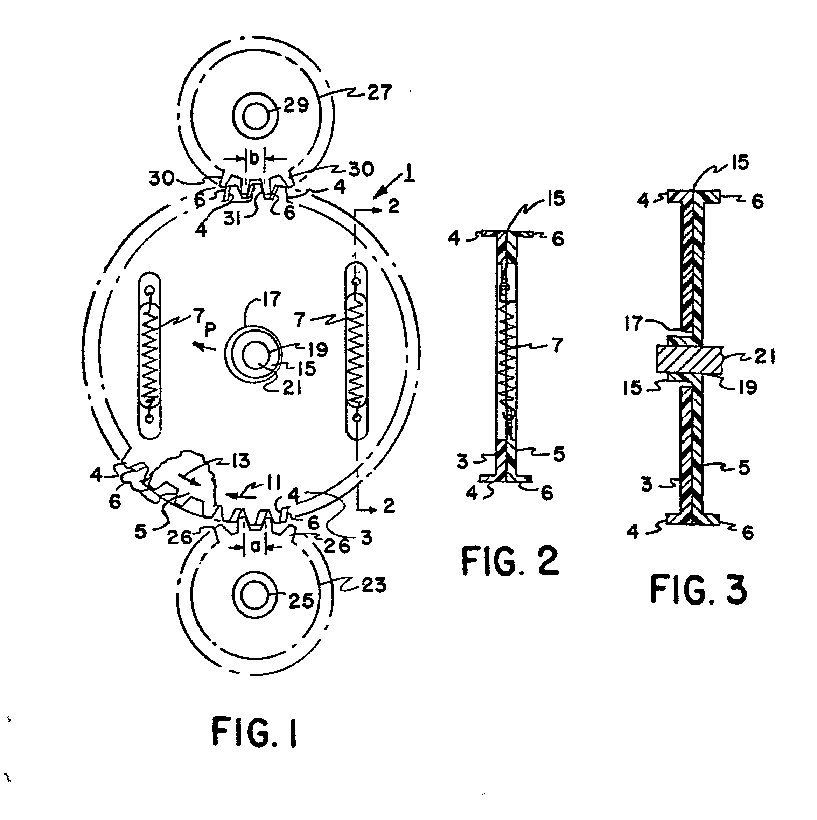

Referring now to the Figures, a split, spring-opposed anti-backlash gear shown generally as 1 is made up of two gears, pivoting gear 3 and locating gear 5. Both pivoting gear 3 and locating gear 5 have identical teeth; teeth 4 on pivoting gear 3 and teeth 6 on locating gear 5. Springs 7 are provided to bias the pivoting gear 3 to move axially in a clockwise direction 11, as shown in Figure 1, and to bias locating gear 5 to move axially in a counterclockwise or opposed direction 13. As well as providing counterrotation bias, springs 7 also act to hold pivoting gear 3 and locating gear 5 together, along their abutting surfaces 15, and axially aligns the pivoting gear 3 on locating gear 5.

In Figure 1 a portion of gear 3 is shown broken away to more clearly show teeth 6 on locator gear 5 and their relationship to teeth 4 on gear 3 as explained further herein.

In this particular preferred embodiment, locator gear 5 is provided with a raised mounting shaft 15 to act as a mounting guide for pivoting gear 3. Pivoting gear 3 is provided with a mounting bore 17, which is larger in diameter than the external diameter of mounting shaft 15. This key feature allows pivoting gear 3 to pivot without restraint from mounting shaft 15. The purpose of mounting shaft 15 is to aid in the assembly and "handleability" of the split, spring-opposed anti-backlash gear 1. Gear 5 is provided with a shaft bore 19 designed to fit closely to its mounting shaft 21 for axial rotational movement therewith.

A gear 23 is mounted for rotation on shaft 25 and has teeth 26 designed to mate with teeth 6 on split, spring-opposed anti-backlash gear 1. A second gear, gear 27, is mounted on shaft 29 for rotational movement therewith. Gear 27 is provided with teeth 30 also designed to mate with teeth 6 on split, spring-opposed anti-backlash gear 1. Gear 23, for example, could be attached to the shaft of a drive motor for a typewriter platen, and gear 27 could be attached to the shaft of a typewriter platen.

The operation of the split, spring-opposed anti-backlash gear 1 of this invention will now be described in connection with Figure 1. Assume that the distance "a" between teeth 26 on gear 23 is greater than the distance "b" between teeth 30 on gear 27. It can be seen that springs 7 will cause locating gear 5 to be urged axially in a counterclockwise direction and pivoting gear 3 to be urged in a clockwise direction, causing teeth 4 on pivoting gear 3 and teeth 6 on locator gear 5 to contact the surfaces of teeth 30, which form gap or distance "b". Since, however, the distance "b" is less than distance "a", axial counterrotation of the locating gear 5 and pivoting gear 3 cannot mate positively with both teeth surfaces that form gap or distance "a". However, because bore 17 of pivoting gear 3 is larger than mounting shaft 15 on locating gear 5, the springs 7 cause pivoting gear 3 to pivot in the required direction (here represented as direction p) about its contact or pivot point, represented by the line of contact 31 between tooth 4 on pivoting gear 3 and tooth 30 on gear 27.

Since pivoting gear 3 has moved in the direction "p" shown in Figure 1, the gears 3 and 5 are offset. As shown in Figure 1, the gap between pivot gear bore 17 and mounting shaft 15 is not uniform but is greater on the left, as shown in Figure 1, than on the right. This pivoting motion of pivoting gear 3 is stopped by one of the teeth 4 on pivoting gear 3 coming in contact with one of the teeth 26 on gear 23.

Obviously, if distance "a" were smaller than distance "b", then pivoting gear 3 would pivot about the appropriate gear interface between one of the teeth 4 on pivoting gear 3 and one of the teeth 26 on gear 23 until contact with one of the teeth 30 on gear 27 was made. It can be seen that positive engagement is assured whether the gears are at rest or moving in either direction. Such gears are particularly useful in such devices as typewriter platen drives where it is necessary to precisely return the platen to a predetermined position for, for example, lifting off or typing over an error, or in plotters where backlash directly affects plot accuracy. Other uses will obviously occur to those skilled in the art.

Claims

1.      A split, spring-opposed anti-backlash gear (1) comprising:

a locator gear (5) mounted for axial rotation on a mounting shaft (21),

a pivoting gear (3) having a bore (17) for mounting on a mounting shaft (15) and connected by springs (7) to said locator gear (5) for axial rotational movement therewith, said springs (7) being attached to said locator gear (5) and said pivoting gear (3) such that said springs (7) bias said locator gear (5) and said pivoting gear (3) counterrotationally and such that said springs (7) will cause said pivoting gear (3) to pivot about its interface with a gear (23, 27) mating with said split, spring-opposed anti-backlash gear (1), said pivoting gear bore (17) being larger than said mounting shaft (15) an amount sufficient to allow said pivoting gear (3) to pivot a distance sufficient to ensure positive engagement with gears (23, 27) mating with said split, spring-opposed anti-backlash gear (1).

FIG. I

FIG. 2

FIG. 3

European Patent
Office

**EUROPEAN SEARCH REPORT**

**0079184**
Application number

EP  82 30 5771

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 H  55/18 |
| X | US-A-3 365 973  (P.J. HENDEN)<br>* Complete document * | 1 | |
| | --- | | |
| X | US-A-2 607 238  (R.R. ENGLISH et al.)<br>* Complete document * | 1 | |
| | --- | | |
| A | US-A-2 966 806  (A.O. LUNING) | | |
| | --- | | |
| A | US-A-2 663 198  (C.W. CAIRNES) | | |
| | ----- | | |

TECHNICAL FIELDS
SEARCHED (Int. Cl. ³)

F 16 H  55/18

The present search report has been drawn up for all claims

| Place of search<br>BERLIN | Date of completion of the search<br>21-01-1983 | Examiner<br>LEMBLE Y.A.F.M. |
|---|---|---|